Europäisches Patentamt

European Patent Office

Office européen des brevets

(11) Publication number: **0 029 732**
**B1**

(12) **EUROPEAN PATENT SPECIFICATION**

(45) Date of publication of patent specification: 30.05.84

(21) Application number: **80304213.4**

(22) Date of filing: **25.11.80**

(51) Int. Cl.³: **F 16 K 27/06**

(54) **Ceramic ball valve.**

| | |
|---|---|
| (30) Priority: 26.11.79 JP 163996/79 u<br>26.11.79 JP 163997/79 u | (73) Proprietor: **Fuji Metal Mfg. Co. Ltd.**<br>**3-4, 2-chome Itachibori Nishi-ku**<br>**Osaka (JP)** |
| (43) Date of publication of application:<br>**03.06.81 Bulletin 81/22** | (72) Inventor: **Sonoda, Yoshiteru**<br>**2-77, Higashi-Awajicho Higashiyodogawa-ku**<br>**Osaka (JP)** |
| (45) Publication of the grant of the patent:<br>**30.05.84 Bulletin 84/22** | |
| | (74) Representative: **Drever, Ronald Fergus et al**<br>**Swindell & Pearson 44, Friar Gate**<br>**Derby DE1 1DA (GB)** |
| (84) Designated Contracting States:<br>**DE FR GB IT NL** | |
| (56) References cited:<br>**DE-C- 162 845**<br>**DE-C- 867 031**<br>**DE-U-6 806 433**<br>**DE-U-7 323 169**<br>**US-A- 885 526**<br>**US-A-3 547 403** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a ball valve, and more particularly to a ceramic ball valve in which the components to be brought into contact with the fluid to be controlled, such as a valve box, a ball housed in the valve box and a valve seat in contact with the ball, are made of ceramics, the ball being formed with a fluid channel and being rotatable for controlling the flow of the fluid.

Reference is made to U.S. Patent Specification No. 3,547,403 which discloses a ball valve having a ball within a valve box, a valve seat of a resilient plastics material being provided at each of inlet and outlet sockets with a sealing ring for rotatably supporting the ball.

Other known ball valves are made of stainless steel, brass or like metal. Metal valves are tough and therefore generally have a sufficient long life but are prone to corrosion when used for controlling the flows of acid or alkali liquids and gases. Accordingly valves for controlling such corrosive fluids must be made from corrosion-resistant materials such as ceramics.

Although resistant to compressive forces, ceramics have low strength against tension, shear and impact. Furthermore, it is almost impossible to join ceramic members together by screwing, adhesion or welding. To make corrosion-resistant valves from ceramic members in combination, it is therefore impossible to join the components together by the above-mentioned method. Additionally the components must be so arranged as to be free from tensile forces.

The ball in ball valves is held between the valve seats at the inlet and outlet sides of the valve in intimate contact therewith. The more intimately the ball is in contact with the valve seats, the smaller is the leakage of the fluid. When the valve is in its closed position, the high-pressure fluid on the inlet side presses the seat on the outlet side and ball against each other tightly. If the valve is held closed for a prolonged period of time, said seat and ball engage each other rigidly and will not be released from each other readily, necessitating great torque to open the valve.

Accordingly the ball valve requires much labor when manually operable. When adapted to be operated mechanically by an actuator, such as a motor or a hydraulic or pneumatic cylinder, the valve needs an actuator of great output, hence uneconomical.

The ball of the ball valve is rotatable by a valve rod connected to the ball. The rod is inserted at its one end in a bore formed in the ball. If the ball and the valve seat involve great friction therebetween, the bored portion is subjected to a great force, which is a kind of shearing force. Consequently, when the ball valve is opened and closed repeatedly a number of times, the bored portion of the ball is liable to break. The frictional force between the ball and the seat is dependent on the pressure acting between the ball and the seat and the coefficient of friction concerned.

The ceramic ball valve of this invention comprises a valve box which has a central inner space and a ball disposed in the inner space and having a fluid channel extending centrally therethrough, wherein the valve box is open at opposite ends, an inlet socket and an outlet socket are arranged in contact with the opposite ends of the valve box to hold the valve box therebetween and respectively have an inlet opening and an outlet opening communicable with the inner space and fastening members join the valve box and the sockets together by a compressive force, a valve seat rotatably supporting the ball comprises surfaces formed respectively around the inlet and outlet openings, characterised in that the surface surrounding the outlet opening is formed directly on the outlet socket, and the valve box, the ball, the sockets and the valve seat are made of ceramic material.

Since the main components of the ball valve to be brought into contact with a fluid are made of ceramics, the valve is resistant to corrosion even if the fluid is an acid or alkali.

The main components of ceramics are tightly joined together by being subjected to a compressive force by the fastening members, so that no shearing force or tensile force will act on these components for joining them together.

To reduce the force of friction to be produced between the ball and the valve seat, the valve seat is formed on each of the sockets, or the ball is formed with a passage for permitting the inlet opening of the inlet socket to communicate with the inner space of the valve box when the ball is in its valve closing position. The reduction of the friction between the ball and the valve seat thus assured according to the invention no longer necessitates great torque when rotating the ball to open the valve, permitting the use of an actuator of small output and eliminating the possible damage to the ball.

Other features of this invention will become apparent from the following description.

Figs. 1 to 3 show an embodiment;

Fig. 1 is a view in section taken along the line I—I in Fig. 2;

Fig. 2 is a right side view of the embodiment;

Fig. 3 is a view in section taken along the line III—III in Fig. 2;

Figs. 4 and 5 are sectional views of a ball and a valve seat for illustrating a force acting therebetween; the ball shown in Fig. 4 having no communication cutout, the ball shown in Fig. 5 being formed with a communication cutout;

Fig. 6 is a sectional view showing a ball having a different communication passage;

Fig. 7 is a sectional view corresponding to Fig. 1 and showing another embodiment; and

Fig. 8 is a sectional view corresponding to Fig. 1 and showing another embodiment.

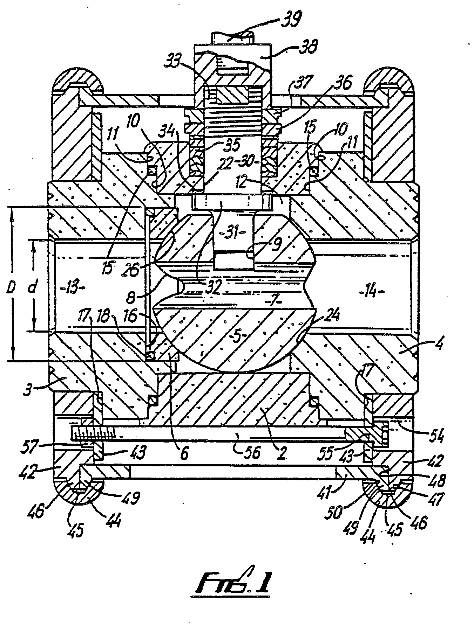

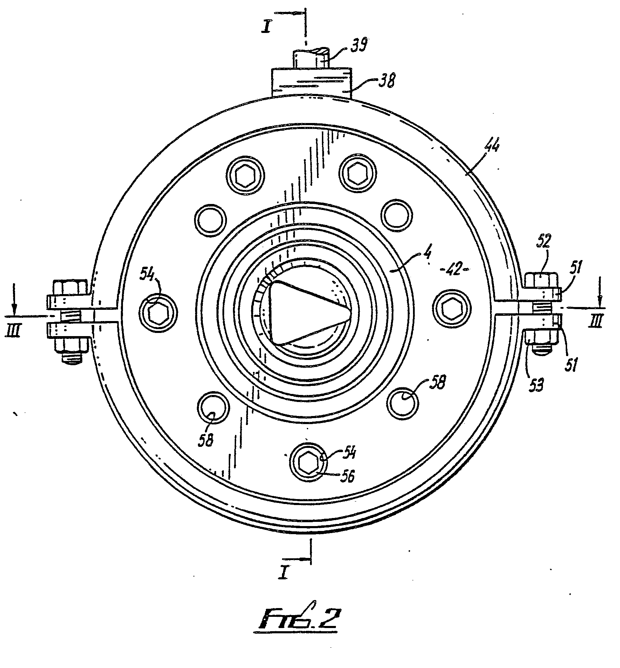

With reference to Figs. 1 to 3, the ceramic ball valve shown consists essentially of a valve box 2 in the form of a cylinder and having an inner space 12 in its center, an inlet socket 3 and an outlet socket 4 arranged at the opposite sides of the valve box 2, and a ball 5 housed in the inner space 12 of the valve box 2. The sockets 3 and 4 each have a circular outer periphery and are centrally formed with an inlet opening 13 and an outlet opening 14, respectively, having a diameter d. Stepped portions 10 and 11 are formed in the opposite ends of the valve box 2 and also in one end of each of the sockets 3, 4. The stepped portions 10, 11 of the opposed members are joined together, with an O-ring 15 provided in each of the junctions, whereby the junction is sealed gas- or liquid-tightly. Each of the other ends of the sockets 3, 4 is also formed with a stepped portion 17.

One end of the inlet socket 3 around the inlet opening 13 has a recess 16 having accommodated therein an annular valve seat member 6. An O-ring 18 is disposed between the recessed portion 16 and the seat member 6. The seat member 6 has a valve seat 26 in smooth contact with the spherical surface of the ball 5. One end of the outlet socket 4 around the outlet 14 has a valve seat 24 in smooth contact with the spherical surface of the ball 5. There is no seat member on the outlet side; the valve seat is formed directly on the socket 4. The ball 5 is rotatably supported on these valve seats 26 and 24.

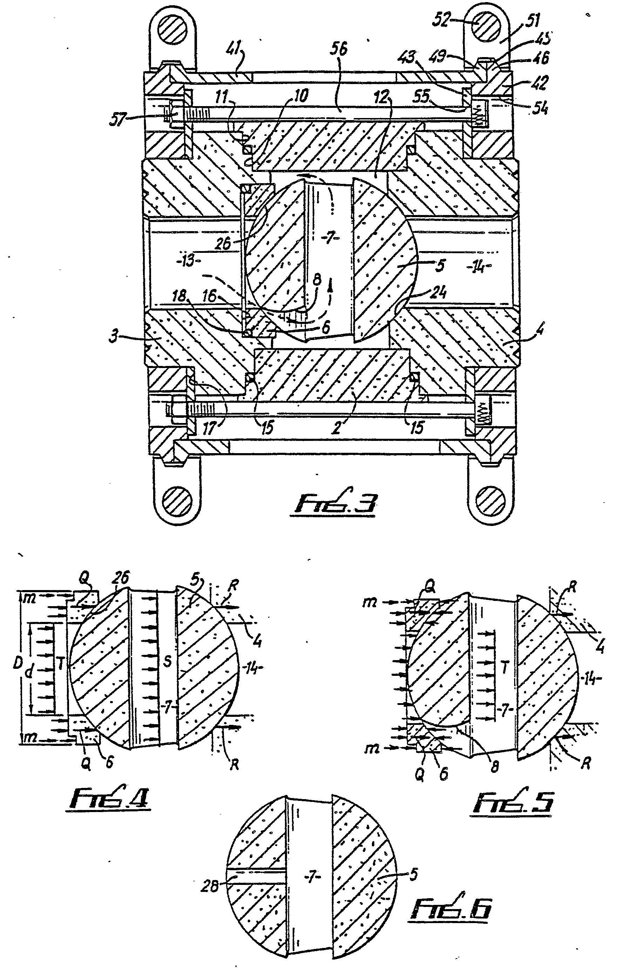

The ball 5 has a fluid channel 7 extending through its center and opened at its opposite ends on the spherical surface of the ball 5. The fluid channel 7 of the present embodiment is substantially triangular in cross section. When having such a triangular cross section, the fluid channel possesses approximately linear flow characteristics. In cross section, the fluid channel may of course be circular, square, rectangular or of any desired shape. When having a circular cross section measuring d in diameter, the fluid channel involves a greatly reduced loss when the valve is in its fully opened position. The ball 5 has a cutout 8 extending from the inlet opening of the channel 7 along the spherical surface. When the valve is fully closed as seen in Fig. 3, the inlet opening 13 communicates with the inner space 12 of the valve box 2 through the cutout 8 and channel 7, permitting the fluid on the inlet side to flow into the inner space 12.

The valve box 2, sockets 3, 4, ball 5 and valve seat member 6 serving as the main components of the ball valve are all made of ceramics. Since these members to be brought into contact with the fluid are made of ceramics, the valve is resistant to corrosion even if the fluid is an acid or alkali.

The ball 5 is cut out at its top to provide a horizontal surface in which a bore 9 of square cross section is formed. A valve rod 30 has a lower end portion 31 having a square cross section and extending downward from a flange 32. The lower end portion 31 of the rod 30 is press-fitted in the bore 9 of the ball 5. The upper half portion of the rod 30 is circular in cross section and has an upper end portion 33 which is externally threaded. The valve box 2 has at its top portion a vertical bore 22 through which the upper half portion of the valve rod 30 extends rotatably. The upper end portion 33 of the rod 30 projects upward from the box 2. The flange 32 has an upper surface in contact with an annular packing 34 provided around the lower end of the bore 22. An annular packing gland 35 is disposed in the bore 22 around the valve rod 30. The gland 35 is held in position by a holder nut 36 and a lock nut 37 which are screwed on the upper end portion 33 of the rod 30. The valve rod 30 is connected at its upper end to the output shaft 39 of an actuator (not shown) by a coupling 38. Accordingly the ball 5 is horizontally rotatable through the desired angle by the rod 30 and actuator.

The ceramic main components of the ball valve are housed in a cylinder 41 having annular projections 49 projecting diametrically outward from its opposite ends. Each of the projections 49 has a slanting face 50 on its inner side and a thickness progressively decreasing diametrically outward. The outer end of each of the sockets 3, 4 having a reduced outside diameter due to the provision of the stepped portion 17 is fittingly provided with an annular plate 43 and an annular flange 42 having a larger thickness than the plate 43. The flange 42 is formed on the inner side thereof along its outer periphery with a stepped portion 48, to which the corresponding end of the cylinder 41 is fitted. The flange 42 has an annular projection 46 on its outer periphery. The projection 46 has a thickness progressively decreasing diametrically outward and a slanting outer side face 47. A fastening ring 44 is provided to cover these projections 49, 46. The fastening ring 44 has inner side faces defining a groove 45 and slanting in conformity with the slanting faces 50 and 47. The fastening ring 44 comprises a pair of semi-circular segments having lugs 51 projecting diametrically outward from their opposed ends. Each pair of opposed lugs 51 are fastened together by a bolt 52 and a nut 53, whereby the cylinder 41 and each flange 42 are tightly held together by the fastening ring 44. Since the projections 49, 46 have the slanting faces 50, 47 and the fastening ring 44 also has inner slanting side faces defining the groove 45, the cylinder 41 and the flange 42 can be joined together more tightly when the bolts 52 and the nuts 53 are tightened up with increased pressure. The fastening ring 44, which comprises a pair of semi-circular segments, can be in the form of an integral ring.

Each of the annular plates 43 is formed with holes 55 for inserting therethrough elongated bolts 56. Each of the flanges 42 is also formed with holes 54 in register with the holes 55 and dimensioned to insert therein the heads of the elongated bolts 56 and nuts 57. The bolts 56 are inserted through the annular plates 43 on the inlet and outlet sides, and the plates 43 are connected together by the bolts 56 and nuts 57. The flanges 42 further have threaded bores 58 in which bolts (not shown) are screwed for connecting unillustrated pipes to the sockets 3, 4.

In this way, the main ceramic components of the ceramic ball valve are rigidly joined together by being subjected to a compressive force with the cylinder 41, flanges 42, annular plates 43, fastening rings 44, elongated bolts 56, etc. Since no shearing force or tensile force is applied to join these main components, the components are unlikely to break. Moreover the components are easy to assemble or disassemble. Preferably the cylinder 41, flanges 42, annular plates 43, fastening rings 44, elongated bolts 56, etc. are made from metal.

When the ball 5 is rotated in the range of up to 90 degrees by the valve rod 30, the valve can be brought to any position between its fully opened position and fully closed position. When the ball valve is in its fully closed position as shown in Fig. 3, the inlet opening 13 is in communication with the inner space 12 of the box 2 via the cutout 8 and fluid channel 7. The O-ring 18 provides a small clearance between the recessed portion 16 formed in the inlet socket 3 and the valve seat member 6 placed in the recess 16, so that the clearance is also filled with the fluid in the inlet. The pressure of the inlet fluid therefore presses the valve seat member 6 against the ball 5. However, the inner space 12 is also full of the inlet fluid, which presses the valve seat member 6 toward the inlet. Consequently the valve seat member 6 is subjected to the same pressure on its opposite sides even if the inlet fluid has high pressure. It therefore follows that the valve seat member 6 is pressed against the ball 5 only by the resilient force of the O-ring 18. Since the force of the O-ring is not so great, the valve seat 26 is not pressed against the ball 5 with high pressure. Even if the valve is held closed for a prolonged period of time, the seat 26 will not engage the ball 5 tightly or unremovably, permitting smooth rotation of the ball 5. The valve is operable with small torque, i.e. by an actuator of small output. Furthermore, the bored portion 9 of the ball 5, which is subjected only to a small force, remains free of damage.

Although it appears likely that the pressure of the inlet fluid, which is delivered through the ball 5 to the valve seat 24 on the outlet socket 4, will produce great friction between the ball 5 and the seat 24, the arrangement of this invention serves to reduce the friction between the ball 5 and the seat 24.

The above feature of this invention will be described below more specifically. It is assumed that the valve seat member 6 has an outside diameter D and an inside diameter $d$ which is equal to the diameters of the inlet and outlet openings 13, 14. The areas of the circles, S and T, having the diameters of D and $d$, respectively, are given by the following equations:

$$S = \frac{\pi}{4} D^2 \qquad (1)$$

$$T = \frac{\pi}{4} d^2 \qquad (2)$$

The difference in pressure per unit area between the inlet side and the outlet side is assumed to be $\Delta P$, and the pressing force of the O-ring 18, $m$.

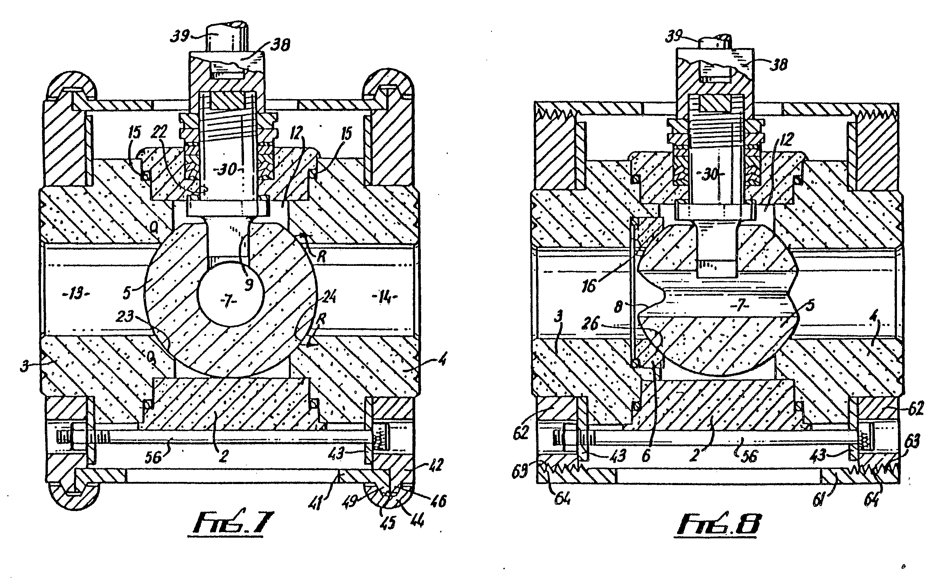

On the assumption that the ball has no cutout 8, the axial components Q and R of the forces on the valve seat member 6 and on the valve seat 24 when the valve is in its closed position act from the inlet side toward the outlet side and are given by the following equations (see Fig. 4):

$$Q = (S - \Delta T)P + m \qquad (3)$$

$$R = S \, \Delta P \qquad (4)$$

When the ball has the cutout 8, the abovementioned forces Q and R are given by the following equations (see Fig. 5):

$$Q = m \qquad (5)$$

$$R = T \, \Delta P \qquad (6)$$

Thus it will be understood that the provision of the cutout 8 serves to reduce the forces acting between the spherical surface of the ball 5 and the valve seats 26, 24, consequently reducing the friction between the contact surfaces.

The communication passage for holding the inlet opening 13 of the inlet socket 3 in communication with the inner space 12 of the valve box 2 when the ball is in its valve closing position is not limited to the cutout 8. As seen in Fig. 6, for example, the ball 5 may be formed with a communication passage 28 intersecting the fluid channel 7 at right angles thereto. The passage 28 has one end opened to the fluid channel 7 and has another open end at the surface of the ball 5.

Fig. 7 shows another embodiment. The ball 5 of this embodiment is not formed with a passage, such as cutout 8 or communication passage 28. The inlet is not provided with the valve seat member 6, either. Instead, the socket 3 is formed around the inlet opening 13 with a valve seat 23 in contact with the ball 5 and conforming to the shape of the spherical surface of the ball 5. The fluid channel 7 is circular in cross section.

In the absence of the valve seat member, the axial force Q acting between the valve seat 23 of the socket 3 and the surface of the ball 5 is zero, except for the mechanical force applied to join the components of the ball valve. The force R acting on the valve seat 24 is equal to the force given by the equation (6). It is also understood that also with this embodiment, the invention reduces the forces between the spherical surface of the ball 5 and the valve seats 23, 24.

Fig. 8 shows another embodiment in which the valve box 2 and the sockets 3, 4 are tightly joined together by different fastening members. A cylinder 61 covering the valve box 2 and the sockets 3, 4 has an internally threaded portion 63 at each of its opposite ends. An annular flange 62 fitted to each of the sockets 3, 4 has an externally threaded portion 64 on the outer periphery thereof. The threaded portions 64 are screwed in the opposed threaded portions 63, whereby the valve box 2 and the sockets 3, 4 are rigidly joined together by a compressive force.

## Claims

1. A ball valve comprising a valve box (2) which has a central inner space (12) and a ball (5) disposed in the inner space and having a fluid channel (7) extending centrally therethrough, wherein the valve box is open at opposite ends, an inlet socket (3) and an outlet socket (4) are arranged in contact with the opposite ends of the valve box to hold the valve box therebetween and respectively have an inlet opening (13) and an outlet opening (14) communicable with the inner space and fastening members join the valve box and the sockets together by a compressive force, a valve seat rotatably supporting the ball (5) comprising surfaces (23 or 26, 24) formed respectively around the inlet and outlet openings (13, 14), characterised in that the surface (24) surrounding the outlet opening is formed directly on the outlet socket (4), and the valve box (2), the ball (5), the sockets (3, 4) and the valve seat are made of ceramic material.

2. A ceramic ball valve according to claim 1, characterised in that the valve seat rotatably supporting the ball (5) is defined, at the inlet side of the valve, by a valve seat member (6) provided adjacent the junction between the socket (3) and the valve box (2).

3. A ceramic ball valve according to claim 2, characterised in that the ball (5) is formed with a passage (8) for permitting the inlet opening (13) of the inlet socket (3) to communicate with the inner space (12) of the valve box (2) when the ball (5) is in a valve closing position.

4. A ceramic ball valve according to any of the preceding claims, characterised in that the fastening members include annular members (43) each fitted to each of the sockets (3, 4) and bolts and nuts (56, 57) for fastening the annular members (43) together.

5. A ceramic ball valve according to any of the preceding claims, characterised in that the fastening members include annular flanges (42) each fitted to each of the sockets (3, 4), a cylinder (41) covering the valve box (2) and the sockets (3, 4) and having opposite ends each in contact with the corresponding one of the flanges (42), and a fastening ring (44) formed with a groove (45) in its inner periphery, each of the annular flanges (42) having a projection (46) on its outer periphery, the cylinder (41) having a projection (49) on the outer periphery of each of its opposite ends, the projections (46, 49) being fitted in the groove (45) of the fastening ring (44) and tightly joined together by the fastening ring (44).

6. A ceramic ball valve according to any of claims 1 to 4, characterised in that the fastening members include annular flanges (62) each fitted to each of the sockets (3, 4) and a cylinder (61) externally covering the valve box (2) and the sockets (3, 4), and each of the flanges (62) is formed on its outer periphery with an externally threaded portion (64) screwed in an internally threaded portion (63) formed at each end of the cylinder (61).

## Revendications

1. Robinet en céramique à tournant sphérique comprenant un boisseau (2), comportant un espace intérieur central (12) et un tournant sphérique (5) disposé dans cet espace intérieur et comprenant un canal pour fluide (7) s'étendant centralement à travers lui, le boisseau étant ouvert à des extrémités opposées, un manchon d'entrée (3) et un manchon de sortie (4) étant disposés en contact avec les extrémités opposées du boisseau de façon à le maintenir entre eux et étant munis respectivement d'une ouverture d'entrée (13) et d'une ouverture de sortie (14) pouvant communiquer avec l'espace intérieur, des organes de fixation rendant solidaires les uns des autres le boisseau et les manchons sous l'effet d'une force de compression, ainsi qu'un siège de robinet supportant en rotation le tournant sphérique (5) et comprenant des surfaces (23 ou 26, 24) formées respectivement autour des ouvertures d'entrée et de sortie (13, 14), caractérisé en ce que la surface (24) entourant l'ouverture de sortie est formée directement sur le manchon de sortie (4) et en ce que le boisseau (2), le tournant sphérique (5), les manchons (3, 4) et le siège de robinet sont en un matériau céramique.

2. Robinet en céramique à tournant sphérique selon la revendication 1, caractérisé en ce que le siège de robinet supportant en rotation le tournant sphérique (5) est défini, du côté de l'entrée du robinet, par un élément de siège (6) prévu à côté de la jonction entre le manchon (3) et le boisseau (2).

3. Robinet en céramique à tournant sphérique selon la revendication 2, caractérisé en ce que le tournant sphérique (5) est réalisé avec un passage (8) permettant à l'ouverture d'entrée (13) du manchon d'entrée (3) de communiquer avec l'espace intérieur (12) du boisseau (2) lorsque le tournant (5) est dans une position de fermeture du robinet.

4. Robinet en céramique à tournant sphérique selon l'une quelconque des revendications précédentes, caractérisé en ce que les organes de fixation comprennent des organes annulaires (43) ajustés chacun à chacun des manchons (3, 4) ainsi que des boulons et des écrous (56, 57) pour lier ensemble les organes annulaires (43).

5. Robinet en céramique à tournant sphériques selon l'une quelconque des revendications précédentes, caractérisé en ce que les organes de fixation comprennent des brides annulaires (42) ajustées chacune à chaque manchon (3, 4), un cylindre (41) couvrant le boisseau (2) et les manchons (3, 4) et dont les extrémités opposées sont chacune en contact avec la bride correspondante (42), et une bague de fixation (44) munie d'une rainure (45) sur sa périphérie intérieure, en ce que chaque bride annulaire (42) comporte une saillie (46) sur sa périphérie externe, en ce que le cylindre (41) présente une saillie (49) sur la périphérie extérieure de chacune de ses extrémités opposées, et en ce ce que les saillies (46, 49) sont montées dans la rainure (45) de la bague de fixation (44) et sont serrées ensemble par la bague de fixation (44).

6. Robinet en céramique à tournant sphérique selon l'une quelconque des revendications 1 à 4, caractérisé en ce que les organes de fixation comprennent des brides annulaires (62) ajustées chacune à chacun des manchons (3, 4) et un cylindre (61) couvrant extérieurement le boisseau (2) et les manchons (3, 4) et en ce que chacune des brides (62) est formée sur sa périphérie extérieure avec une partie filetée extérieurement (64) vissée dans une partie filetée intérieurement formée à chaque extrémité du cylindre (61).

### Patentansprüche

1. Kugelventil mit einem an entgegengesetzten Enden offenen Ventilgehäuse (2), das einen zentralen Innenraum (12) und eine Kugel (5) aufweist, die in dem Innenraum angeordnet ist und einen sich zentral hindurch erstreckenden Fluidkanal (7) enthält, wobei ein Einlaßstutzen (3) und ein Auslaßstutzen (4) in Kontakt mit den entgegengesetzten Enden des Ventilgehäuses angeordnet sind, um dazwischen das Ventilgehäuse zu halten, und jeweils eine Einlaßöffnung (13) bzw. eine Auslaßöffnung (14) aufweisen, die mit dem Innenraum verbindbar ist, wobei Befestigungsglieder das Ventilgehäuse und die Stutzen durch eine Druckkraft miteinander verbinden und wobei ein die Kugel (5) drehbar haltender Ventilsitz jeweils um die Einlaßöffnung (13) bzw. Auslaßöffnung (14) herum ausgebildete Oberflächen (23 oder 26, 24) enthält, dadurch gekennzeichnet, daß die die Auslaßöffnung umgebende Oberfläche (24) unmittelbar am Auslaßstutzen (4) ausgebildet ist und daß das Ventilgehäuse (2) die Kugel (5), die Stutzen (3, 4) und der Ventilsitz aus Keramikmaterial bestehen.

2. Keramisches Kugelgentil nach Anspruch 1, dadurch gekennzeichnet, daß der die Kugel (5) drehbar haltende Ventilsitz an der Einlaßseite des Ventils von einem Ventilsitzglied (6) gebildet wird, das der Verbindung zwischen dem Stutzen (3) und dem Ventilgehäuse (2) benachbart ist.

3. Keramisches Kugelventil nach Anspruch 2, dadurch gekennzeichnet, daß die Kugel (5) mit einem Durchgang (8) versehen ist, der es ermöglicht, daß die Einlaßöffnung (13) des Einlaßstutzens (3) mit dem Innenraum (12) des Ventilgehäuses (2) in Verbindung steht, wenn die Kugel (5) in einer Ventilschließstellung ist.

4. Keramisches Kugelventil nach einem der vorhergehenden Ansprüche, dadurch gekennzeichnet, daß die Befestigungsglieder jeweils an einem der Stutzen (3, 4) angebrachte Ringglieder (43) sowie Bolzen und Muttern (56, 57) zum Zusammenhalten der Ringglieder (43) enthalten.

5. Keramisches Kugelventil nach einem der vorhergehenden Ansprüche, dadurch gekennzeichnet, daß die Befestigungsglieder jeweils an einem der Stutzen (3, 4) angebrachte Ringflansche (42), einen das Ventilgehäuse (2) und die Stutzen (3, 4) abdeckenden und entgegengesetzte Enden, die jeweils in Kontakt mit dem zugehörigen Flansch (42) stehen, aufweisenden Zylinder (41) und einen Befestigungsring (44), der am Innenumfang mit einer Nut (45) versehen ist, enthalten, wobei jeder Ringflansch (42) am Außenumfang einen Vorsprung (46) aufweist, der Zylinder (41) am Außenumfang jedes seiner entgegengesetzten Enden einen Vorsprung (49) besitzt und die Vorsprünge (46, 49) in die Nut (45) des Befestigungsrings (44) eingreifen sowie durch den Befestigungsring (44) dicht miteinander verbunden sind.

6. Keramisches Kugelventil nach einem der Ansprüche 1 bis 4, dadurch gekennzeichnet, daß die Befestigungsglieder jeweils an einem der Stutzen (3, 4) angebrachte Ringflansche (62) und einen das Ventilgehäuse (2) und die Stutzen (3, 4) außen abdeckenden Zylinder (61) enthalten, wobei jeder Flansch (62) an seinem Außenumfang mit einem Außengewindebereich (64) versehen ist, der in einen an jedem Ende des Zylinders (61) ausgebildeten Innengewindebereich (63) eingeschraubt ist.

0 029 732

_FIG. 1_

*FIG. 2*

Fig.3

Fig.4

Fig.5

Fig.6

FIG.7

FIG.8

0 029 732